Europäisches Patentamt

European Patent Office

Office européen des brevets

(19)

(11) **EP 0 938 644 B1**

(12) **FASCICULE DE BREVET EUROPEEN**

(45) Date de publication et mention
de la délivrance du brevet:
**16.04.2003 Bulletin 2003/16**

(51) Int Cl.⁷: **G01C 19/72**

(21) Numéro de dépôt: **97947069.7**

(86) Numéro de dépôt international:
**PCT/FR97/02057**

(22) Date de dépôt: **14.11.1997**

(87) Numéro de publication internationale:
**WO 98/021551 (22.05.1998 Gazette 1998/20)**

(54) **GYROMETRE A FIBRE OPTIQUE MULTIMODE, A RESOLUTION ET A STABILITE AMELIOREES**

MULTIMODALER FASEROPTISCHER KREISEL MIT VERBESSERTER AUFLÖSUNG UND
STABILITÄT

MULTIMODE OPTICAL FIBER GYROMETER, WITH IMPROVED RESOLUTION AND STABILITY

(84) Etats contractants désignés:
**DE ES FR GB IT SE**

(30) Priorité: **14.11.1996 FR 9614048**

(43) Date de publication de la demande:
**01.09.1999 Bulletin 1999/35**

(73) Titulaire: **Talltec Technologies Holdings S.A.
2012 Luxembourg (LU)**

(72) Inventeur: **BOUAMRA,Mohamed
67100 Strasbourg (FR)**

(74) Mandataire: **Metz, Paul et al
Cabinet METZ PATNI,
63, rue de la Ganzau
67100 Strasbourg (FR)**

(56) Documents cités:
**WO-A-83/01683**        **FR-A- 2 680 570
FR-A- 2 725 784**

EP 0 938 644 B1

**Description**

L'invention se rapporte à un gyromètre à fibre optique multimode, monoaxe ou multiaxes, à résolution et à stabilité améliorées.

L'amélioration porte essentiellement sur la stabilité de biais et du facteur d'échelle.

Des gyromètres en anneau à fibre optique multimode sont connus. Ces solutions antérieures ne correspondent néanmoins pas à des montages industriellement réalistes, c'est-à-dire permettant d'atteindre les objectifs visés par les inventions et une fabrication industrielle.

Ces réalisations antérieures reposent sur l'effet SAGNAC et souvent sur le principe physique de réciprocité selon lequel une perturbation extrinsèque doit induire les mêmes effets de phase sur les deux ondes contrarotatives se propageant dans le guide en anneau. Or, ces considérations imposent une configuration réciproque à deux coupleurs du dispositif d'entrée/sortie du système, ce qui augmente de façon sensible les coûts de fabrication et dégrade le bilan de puissance.

D'autre part, les réalisations de l'art antérieur font également souvent appel à des méthodes particulières de modulation et de détection difficiles à mettre en oeuvre et imposant des conditions de fabrication très restrictives.

L'avantage essentiel de la présente invention réside dans l'utilisation d'une source, d'une fibre optique et d'un circuit de détection qui conduisent à des réalisations bon marché, faciles à mettre en oeuvre dans l'industrie.

Pour atteindre ces objectifs, le choix des composants est réalisé de sorte que leur association réponde à deux critères essentiellement.

Le premier de ces critères concerné l'obtention d'un maximum de dispersion entre deux modes voisins quels que soient les modes considérés. Cette condition est vérifiée moyennant un choix adéquat entre d'une part les caractéristiques de la source, c'est-à-dire sa largeur spectrale et sa longueur d'onde centrale, et d'autre part les paramètres influant sur les caractéristiques de dispersion de la fibre, à savoir sa longueur, son ouverture numérique, son profil d'indice et autres caractéristiques optogéométriques de la fibre.

La variante d'exécution préférée de l'invention se rapporte à une source à large spectre associée à une fibre très dispersive.

Le second critère concerne le respect de la symétrie des distributions modales pour les deux sens de propagation.

La présente invention a pour but principal de fournir une valeur de sortie proportionnelle à la vitesse dite de rotation c'est-à-dire au déplacement angulaire qui est indépendante des principales fluctuations diverses des composants du gyromètre.

Selon une variante l'invention permet de fournir une information sur la vitesse de rotation indépendante des principales fluctuations diverses des composants du gyromètre dont la variation de la longueur d'onde de la source restée difficile à maîtriser jusqu'à présent.

Dès lors, pour des plages étendues de température de fonctionnement, il n'est plus nécessaire de prendre de multiples précautions pour minimiser les variations de longueur d'onde de la source.

D'autres avantages de l'invention sont énumérés ci-dessous :

- L'utilisation d'une fibre multimode à diamètre de coeur important et à grande ouverture numérique permet de lui associer une source lumineuse fortement divergente sans nuire au rendement énergétique à l'injection. Une simple diode électroluminescente à très bas prix de revient convient à cet effet. Il en est de même pour les autres opérations de connexion.

- La configuration réciproque à deux coupleurs du dispositif d'entrée/sortie du gyromètre n'est plus nécessaire. Un unique coupleur X peut être utilisé, d'où une nette diminution des coûts de fabrication et une amélioration sensible du bilan de puissance du capteur.

- Le signal lumineux dans la fibre étant complètement dépolarisé, il n'est nullement nécessaire, comme c'est le cas des gyromètres à fibres monomodes, d'utiliser des polariseurs, des contrôleurs de polarisation ou des systèmes de dépolarisation. En outre, le capteur devient totalement insensible aux champs magnétiques (effet Faraday) et aux champs électriques (effet Kerr). Il n'est plus nécessaire d'utiliser des matériaux de blindage coûteux contre ces effets. Il en résulte une diminution notable du nombre de composants et une grande simplification dans les opérations de montage.

- La stabilité du système est basée sur les propriétés optiques de ses composants. Elle résulte de l'assimilation possible du gyromètre à un nombre élevé de gyromètres élémentaires indépendants. Il n'est donc plus nécessaire de refaire le zéro du gyromètre avant chaque utilisation, ce qui a pour avantage de permettre le stockage des systèmes et leur utilisation immédiate lorsque nécessaire.

- La possibilité de réaliser le gyromètre en petites dimensions constitue un avantage important pour certaines applications nécessitant des minigyromètres.

- Les grandeurs sélectionnées à savoir les harmoniques 0, 1 et 2 placées dans des formules mathématiques adaptées permettent d'obtenir des gyromètres à facteur d'échelle indépendant des principales fluctuations caractérisant l'instabilité des gyromètres de ce type.

D'autres caractéristiques et avantages de la présente invention ressortiront mieux de la description qui suit, effectuée à titre d'exemple selon un mode d'exécution préféré en référence au dessin accompagnant sur lequel :

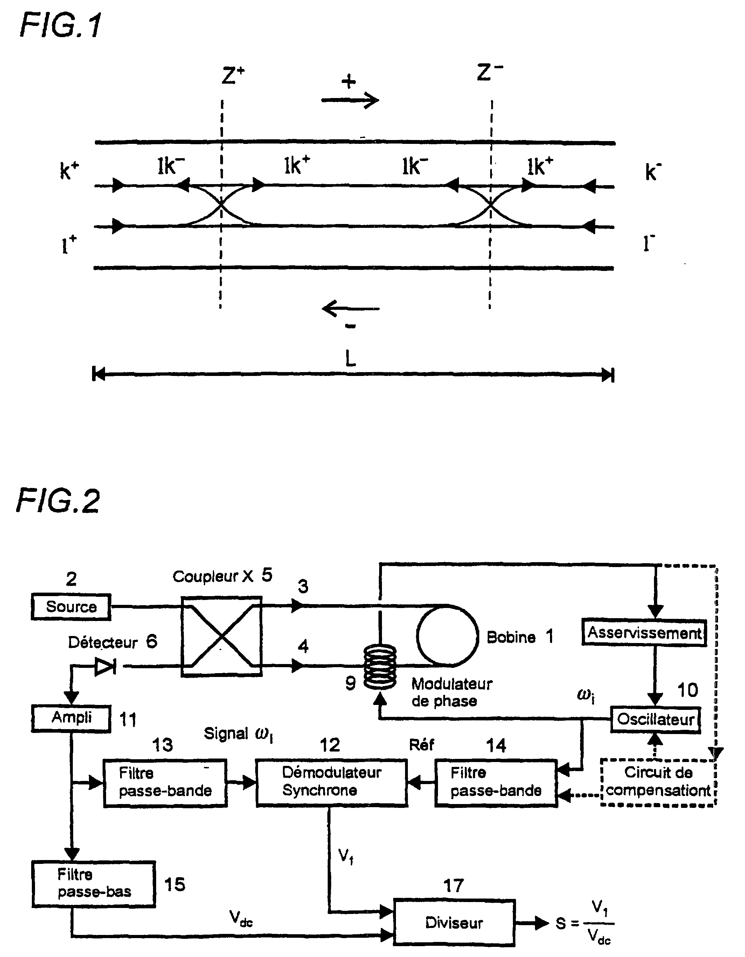

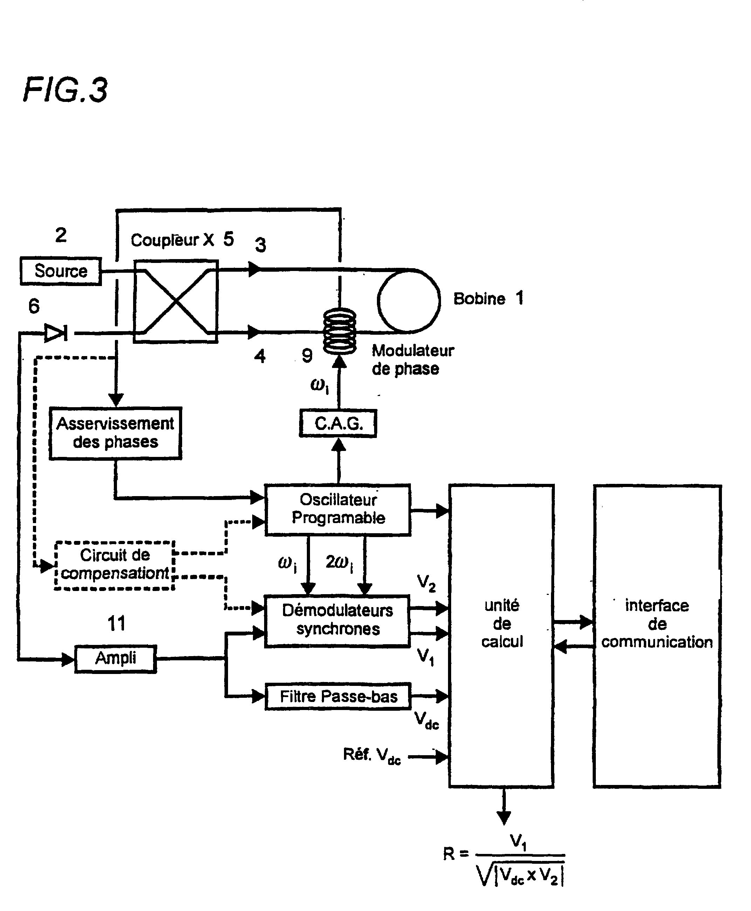

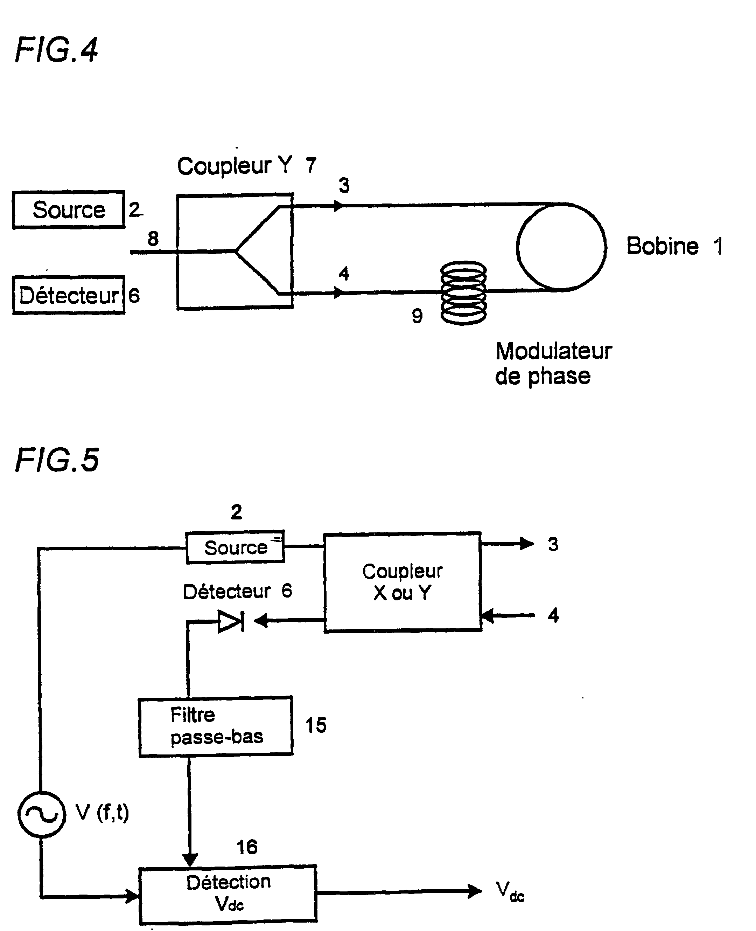

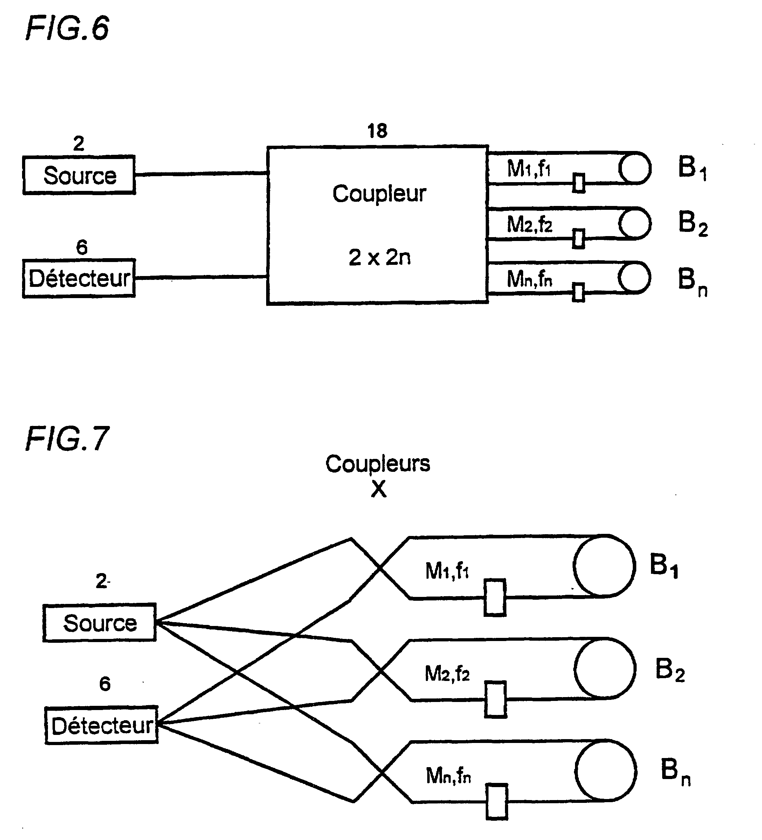

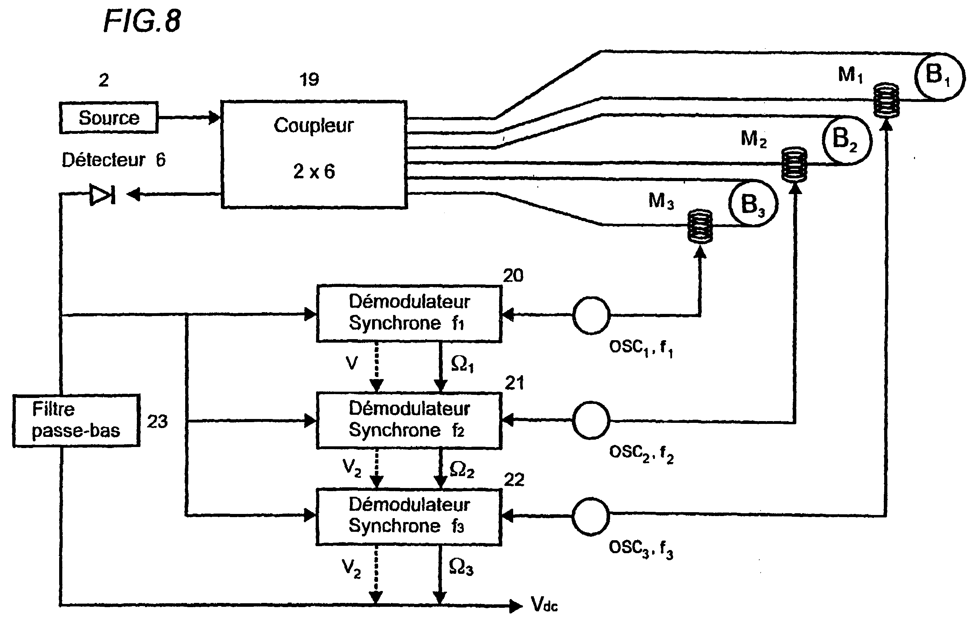

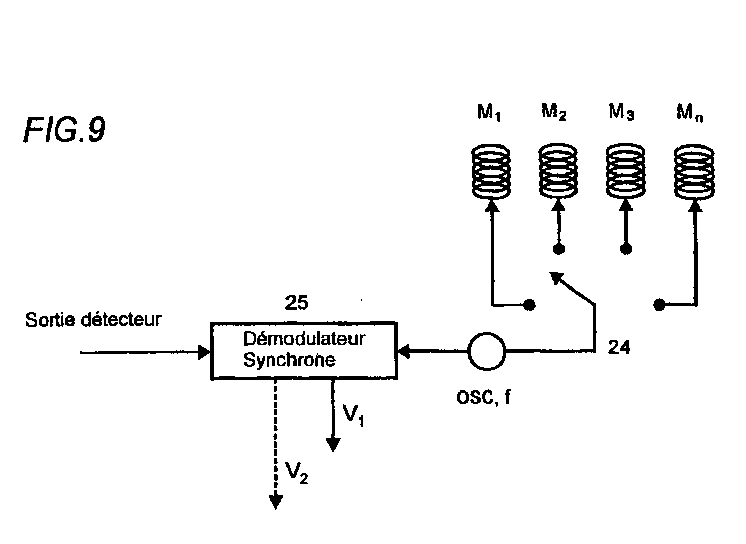

- . la figure 1 est une représentation de principe de l'effet physique de la propagation des modes et leur couplage ;
- . la figure 2 est une représentation schématique en blocs fonctionnels d'un gyromètre conforme à l'invention dans le cas d'une première formule de traitement du signal de sortie ;
- . la figure 3 est une représentation schématique en blocs fonctionnels d'un gyromètre conforme à l'invention dans le cas d'une deuxième formule de traitement du signal de sortie ;
- . la figure 4 est une représentation schématique partielle d'une variante d'exécution du gyromètre avec un coupleur unique Y ;
- . la figure 5 est une représentation schématique partielle du gyromètre de la figure 1 avec modulation en amplitude de la source lumineuse ;
- . la figure 6 est une représentation schématique de principe d'un gyromètre multiaxes ;
- . la figure 7 est une représentation schématique de principe d'un gyromètre multiaxes dans une version simplifiée ;
- . la figure 8 est une représentation schématique d'un gyromètre à trois axes et trois oscillateurs ;
- . la figure 9 est une représentation schématique d'une variante d'exécution du gyromètre multiaxes à commutation des modulateurs de phase.

Le premier but de l'invention est de s'affranchir des principales causes d'instabilité en réalisant des montages et circuits qui permettent d'obtenir des valeurs de sortie qui, associées mathématiquement conduisent à un résultat représentant l'information sur la vitesse de rotation c'est-à-dire du déplacement angulaire du gyromètre. Cette valeur est indépendante des variations provenant des fluctuations diverses liées au composants du gyromètre. Selon une variante de l'invention, le résultat est également indépendant des variations de longueur d'onde de la source.

Par ailleurs, afin de garantir un fonctionnement satisfaisant du gyromètre, on procède à un choix adéquat entre d'une part les caractéristiques de la source, à savoir sa largeur spectrale et sa longueur d'onde centrale, et d'autre part les paramètres influant sur les caractéristiques de dispersion de la fibre, à savoir sa longueur, son ouverture numérique, son profil d'indice etc...

En effet, sous l'effet d'une perturbation intrinsèque ou extrinsèque, deux modes copropagatifs voisins d'ordres quelconques peuvent se coupler et produire des interférences responsables d'instabilités dans la réponse du gyromètre. Pour remédier à ce problème, il est nécessaire de garantir l'indépendance totale entre modes, ceci afin de rendre les couplages entre modes aussi incohérents que possible.

On montre que cette condition est vérifiée lorsqu'on choisit une fibre à dispersion intermodale telle que la différence de chemin optique soit très supérieure à la longueur de cohérence de la source lumineuse. Comme la dispersion intermodale dans une fibre est dépendante de son profil d'indice, une fibre à saut d'indice dont le coefficient de profil de l'indice tend vers l'infini vérifie bien ce critère lorsqu'elle est associée à une source à large spectre.

En plus de l'affranchissement des fluctuations des composants sur le résultat, la stabilité du gyromètre selon l'invention est basée sur l'effet physique de moyennage modal, et sur le principe dont la description va être effectuée en référence à la figure 1 sur laquelle on a représenté une section de fibre optique de longueur arbitraire L modélisée comme un système à M groupes de modes indépendants à double entrée-sortie, sur laquelle sont définis deux sens contraires de propagation modale notés respectivement + et -.

Parmi l'ensemble des modes indépendants susceptibles de se propager dans la fibre, on considère deux modes voisins k et l quelconques que l'on note respectivement $(k^+, l^+)$ et $(k^-, l^-)$ pour chacune des directions de propagation modale dans la fibre.

Du fait de la condition d'indépendance entre les modes, les combinaisons modales peuvent être soit cohérentes, soit incohérentes. A titre illustratif, on décrira les modes issus du couplage entre les modes directs $(k^+, k^-)$ et les modes couplés $(lk^+, lk^-)$ issus du mode voisin l qui se couple dans le mode k. Les différentes combinaisons possibles au niveau du mode k sont détaillées ci-dessous :

- . combinaison entre modes directs :
  la combinaison des modes $(k^+, k^-)$ donne un signal d'interférence réciproque c'est-à-dire ne contenant pas de terme de perturbation ;
- . combinaison entre modes directs et modes couplés :

  - les combinaisons $(k^+, lk^+)$ et $(k^-, lk^-)$ correspondent à des combinaisons entre modes copropagatifs et incohérents car issus des deux modes k et l supposés initialement indépendants. Ces combinaisons ne produisent donc pas d'interférence et contribuent seulement au signal optique incohérent.

- les combinaisons (k+,lk-) et (k-,lk+) correspondent à des combinaisons entre modes contrapropagatifs mais incohérents car issus de deux modes indépendants. De même que ci-dessus, elles ne produisent pas d'interférence et contribuent uniquement au signal optique continu ;

. combinaison entre modes couplés :

la combinaison (lk+,lk-) correspond à une combinaison entre modes contrapropagatifs issus des modes l+ et l- initialement cohérents. Les modes (lk+,lk-) parcourent néanmoins dans la fibre des chemins optiques différents, ce qui garantit généralement leur indépendance, sauf dans un cas particulier que l'on va maintenant examiner.

Il faut en effet considérer le cas des modes issus de couplages dus à des perturbations stationnaires localisées de manière symétrique sur la bobine, par exemple en Z+ et en Z- comme représenté schématiquement -sur la figure 1. Les combinaisons entre modes créés respectivement en Z+ et en Z-, à savoir (lk+(Z+) ,lk-(Z-)) et (lk-(Z+),lk+(Z-)), restent cohérentes dans la mesure où elles parcourent sensiblement les mêmes chemins optiques dans la fibre. Or les perturbations ne sont pas forcément identiques et produisent alors des déphasages faisant apparaître des termes non réciproques sources d'instabilités dans la réponse du gyromètre.

La démonstration ci-dessus a été effectuée en référence à un mode donné de propagation k. Elle doit maintenant être étendue à l'ensemble des modes possibles dans la fibre sur la longueur totale de celle-ci.

Le signal de sortie résultant apparaît alors comme la somme de deux composantes :

. une première composante incohérente continue issue des couplages entre modes incohérents ;
. une seconde composante cohérente qui est elle-même la somme de signaux issus des combinaisons entre modes directs homologues présentant les termes de phase Sagnac, et de signaux issus des combinaisons entre modes couplés présentant à la fois des termes de phase Sagnac et des termes d'instabilité.

On cherche à diminuer l'influence des termes d'instabilité. Une solution consisterait à utiliser une fibre très fortement multimode. En effet, plus le nombre de modes possibles dans la fibre est important, plus le nombre de combinaisons entre modes est élevé, et plus la valeur moyenne prise par les signaux aléatoires d'instabilité tend vers zéro, rendant ainsi le gyromètre intrinsèquement stable. Cette solution présente néanmoins un inconvénient. L'augmentation du nombre de modes dans la fibre s'accompagne d'une augmentation de la composante incohérente continue du signal et donc du bruit photonique qu'elle génère. Ceci a pour conséquence une dégradation du rapport signal/bruit et donc de la résolution du signal dont on montre par le calcul qu'elle est inversement proportionnelle au nombre total de modes possibles dans la fibre.

On est donc amené à rechercher un compromis entre stabilité et résolution du signal, c'est-à-dire à rechercher un maximum de dispersion intermodale tout en limitant le nombre total de modes dans la fibre.

Or, on montre par le calcul que tous les termes issus des modes couplés contribuent dans un rapport $L_{cf}/L$ au signal global, où $L_{cf}$ est la longueur de cohérence dans la fibre et $L$ sa longueur totale.

Le nombre total de modes dans la fibre pourra donc être limité sans nuire à la stabilité du signal si dans le même temps on limite la contribution des termes d'instabilité audit signal par minoration du rapport $L_{cf}/L$. Ce résultat peut être atteint soit par une augmentation de la longueur totale $L$ de la fibre optique, soit par une diminution de la longueur de cohérence $L_{cf}$ dans la fibre. Or la longueur de cohérence $L_{cf}$ dans la fibre est proportionnelle à la différence des temps de propagation des groupes de modes d'ordre k et l considérés notée $\Delta\tau_{l,k}$ avec

$$\Delta\tau_{l,k} = \frac{n\,L_{cf}}{c}\,\Delta\left(\frac{2-2p-\alpha}{\alpha+2}\right)\cdot\left[\left(\frac{l}{M}\right)^{\frac{2\alpha}{\alpha+2}} - \left(\frac{k}{M}\right)^{\frac{2\alpha}{\alpha+2}}\right]$$

où :

$L_{cf}$ est la portion de longueur de fibre considérée,
n est l'indice de coeur de la fibre,
c est la vitesse de la lumière,
$\Delta$ est la différence relative des indices de coeur et de gaine de la fibre,

p est le paramètre de dispersion chromatique de la fibre,

α est le profil d'indice de la fibre, et

M est le nombre total de groupes de modes.

La proportion d'énergie cohérente générée par les couplages entre les modes k et l est telle que la différence de chemin optique entre ces deux groupes de modes est au plus égale à la longueur de cohérence de la source, soit :

$$\frac{L_{cf}}{L} = \frac{L_{cs}}{L.ON^2}\left(\frac{\alpha+2}{2-2p-\alpha}\right)\frac{1}{\left[\left(\frac{l}{M}\right)^{\frac{2\alpha}{\alpha+2}} - \left(\frac{k}{M}\right)^{\frac{2\alpha}{\alpha+2}}\right]}$$

où :

$L_{cs}$ est la longueur de cohérence de la source,

L est la longueur totale de la fibre, et

ON est l'ouverture numérique de la fibre.

Il découle de la formule qui précède que les différents paramètres sur lesquels il est possible d'agir pour atteindre le compromis recherché entre stabilité et résolution sont les suivants : profil d'indice, longueur d'onde centrale de la source, largeur spectrale de la source, paramètre de dispersion chromatique de la fibre, ouverture numérique, rayon, coeur et longueur de la fibre.

Le gyromètre représenté schématiquement dans son ensemble sur la figure 2 comprend un guide en anneau ou bobine 1 constitué par un enroulement de fibre optique de longueur variable dépendant de la sensibilité recherchée, pratiquement de l'ordre de quelques mètres à plusieurs centaines de mètres. Selon l'invention, la fibre optique est obligatoirement une fibre multimode présentant un profil d'indice permettant d'obtenir une dispersion intermodale élevée. Un exemple préféré d'une telle fibre est une fibre multimode à saut d'indice.

Comme représenté sur les figures 2 et 3, une source de lumière 2 faiblement cohérente et à large spectre, préférentiellement une diode électroluminescente, alimente les deux entrées 3 et 4 de la bobine 1 de fibre optique par l'intermédiaire d'un unique coupleur 5 en X. Ce coupleur unique également multimode est à symétrie de répartition modale dans les deux sens c'est-à-dire qu'il permet de séparer l'onde émise par la source de lumière 2 en deux distributions modales contrapropagatives symétriques.

Le coupleur 5 en X permet également de recueillir les ondes ayant parcouru la bobine 1 en sens inverse l'une par rapport à l'autre, et de les diriger vers un détecteur d'interférence 6, préférentiellement une photodiode disposée sur le trajet de sortie du gyromètre.

Selon une variante d'exécution de l'invention représentée sur la figure 4, les extrémités de la bobine 1 sont couplées à l'ensemble constitué par la source de lumière 2 et le détecteur d'interférence 6 par l'intermédiaire d'un seul coupleur 7 en Y. Dans ce cas, la source 2 et le détecteur 6 sont placés au même niveau sur la branche d'entrée 8 du coupleur 7. Deux modes de fonctionnement peuvent être envisagés. Dans un premier mode de fonctionnement, la source lumineuse 2 et le détecteur d'interférence 6 travaillent périodiquement en alternance l'un par rapport à l'autre. Dans un second mode de fonctionnement, la source lumineuse 2 et le détecteur d'interférence 6 travaillent de façon continue et simultanée.

On a examiné les différents éléments optiques du gyromètre selon l'invention qui sont réalisés de préférence à base de composants d'optique diffractive. On examinera maintenant les circuits fonctionnels électroniques qui leur sont associés.

Des moyens modulateurs de phase tels que 9 du signal optique appelés simplement modulateur 9 sont disposés de façon asymétrique sur l'une des entrées 3 ou 4 de la bobine 1 de fibre optique multimode, de sorte que toute la longueur de la fibre optique est utilisée à la façon d'une ligne à retard, l'onde corotative trouvant tout de suite le modulateur 9, tandis que l'onde contrarotative doit d'abord parcourir toute la longueur de la bobine 1 avant de trouver ce dernier.

Diverses variantes d'exécution non représentées du modulateur de phase 9 peuvent être envisagées.

Une première variante se rapporte de façon connue à un tube en matériau piézoélectrique sur lequel est enroulée une longueur de fibre optique multimode.

Une seconde variante se rapporte à un tronçon de fibre multimode dont la gaine est recouverte d'un revêtement piézoélectrique. Cette solution permet avantageusement de limiter l'encombrement des moyens modulateurs de phase 9.

Une autre variante concerne une fibre multimode insérée dans un capillaire piézoélectrique flexible.

Une autre variante encore concerne une fibre présentant une modulation périodique de son indice de coeur sur une partie de sa longueur, modulation obtenue par photogravure ou par procédé de traitement chimique. Cette solution a pour mérite de permettre une modulation de phase des ondes lumineuses contrarotatives directement au coeur de la fibre, en s'affranchissant de l'ensemble du dispositif de modulation classique. Elle permet de ce fait de réaliser des gains significatifs en termes de coûts et d'encombrement.

Le montage se poursuit par un oscillateur sinusoïdal 10 de modulation qui fournit la référence $\omega_i$ qui sert à fournir un signal de modulation $\omega_i$ approprié au modulateur 9.

Le circuit de détection proprement dit comprend en premier lieu un amplificateur 11 disposé à la suite du détecteur d'interférence 6 qui attaque un démodulateur synchrone 12. Le signal de modulation $\omega_i$ délivré par l'oscillateur sinusoïdal de modulation 10 excitant le modulateur de phase 9 sert également de signal de référence au démodulateur synchrone 12.

Afin de neutraliser les fluctuations liées au modulateur de phase 9 on asservi par une boucle d'asservissement la phase et l'amplitude du signal modulé par rapport au signal de modulation qui est en même temps le signal de référence du démodulateur synchrone 12.

On peut également pallier les fluctuations de caractéristiques du modulateur 9 par un circuit de compensation approprié (représenté en traits brisés) agissant sur l'oscillateur local 10 et le démodulateur synchrone à partir par exemple d'un capteur de modulation situé dans ou à proximité du modulateur 9.

Selon une variante préférée, on utilise deux filtres passe-bandes 13 et 14 disposés respectivement entre l'amplificateur 11 et le démodulateur synchrone 12 d'une part, et entre le démodulateur 12 et l'oscillateur sinusoïdal de modulation 10 d'autre part. L'utilisation de ces deux filtres 13 et 14 a pour but surtout d'éviter les éventuels phénomènes de non-linéarité en fréquence du modulateur de phase 9. En effet, même lorsqu'on attaque le modulateur de phase 9 avec une seule fréquence, il peut arriver que celui-ci se mette à osciller sur des modes correspondant à des fréquences différentes de la fréquence de modulation. Il est donc préférable de filtrer au moyen des filtres passe-bandes centrés sur la fréquence du signal de modulation $\omega_i$ du modulateur 9 pour s'affranchir de ces phénomènes de non-linéarité.

A la sortie de l'amplificateur 11, on passe par un filtre passe-bas 15 à coupure basse en fréquence pour isoler la composante incohérente continue $V_{dc}$ du signal optique.

Une solution beaucoup plus précise que le simple filtrage passe-bas de la composante incohérente continue $V_{dc}$ du signal optique est représentée sur la figure 5. Elle consiste à moduler la source lumineuse 2 en amplitude au moyen d'une tension de modulation périodique délivrée par un générateur V(f,t) à une fréquence de modulation f très sensiblement inférieure à la fréquence de modulation $\omega_i$ du signal d'attaque du modulateur de phase 9. Une unité de détection 16 sous la forme d'un double démodulateur synchrone en quadrature détecte ensuite la composante continue incohérente $V_{dc}$ du signal optique. Cette solution présente l'avantage de permettre la détection de très faibles variations de cette composante incohérente continue $V_{dc}$ du signal optique.

Le montage de la figure 2 se termine par un module diviseur 17 recevant d'une part provenant du démodulateur synchrone une tension $V_1$ correspondant à un facteur de proportionnalité près à l'amplitude de la composante de l'harmonique d'ordre 1 (le fondamental) du signal optique et la tension $V_{dc}$ correspondant à la composante incohérente continue du signal optique. Le module diviseur a pour fonction d'effectuer le rapport arithmétique :

$$S = V_1/V_{dc}$$

représentant à un facteur constant multiplicateur près le facteur d'échelle du gyromètre c'est-à-dire la valeur algébrique positive ou négative exploitable pour déterminer la vitesse de rotation à savoir la vitesse du déplacement angulaire du gyromètre et donc du support sur lequel il est monté se déplaçant avec lui par pivotement autour de l'axe d'un repère dans l'espace. L'intérêt de ce rapport de valeurs concerne la compensation de la majorité des variations et des fluctuations d'intensité liées aux instabilités de la source optique, aux pertes dans la fibre, au détecteur optique et aux autres composants si bien que l'on arrive à s'affranchir ainsi de la plupart des fluctuations liées aux fluctuations du facteur d'échelle du gyromètre.

Il reste cependant celle liée à la fluctuation en longueur d'onde de la source que l'on tend de maintenir à un minimum lorsque l'on utilise le montage et la méthode du quotient représentés sur la figure 2.

Un autre montage représenté sur la figure 3 correspond à un autre quotient. On utilise en plus ici l'harmonique d'ordre 2. Ce quotient indiqué ci-après permet de s'affranchir des différentes fluctuations, mais en plus de celles engendrant des variations de longueur d'onde de la source.

On détecte et on exploite selon cette variante les valeurs $V_1$ et $V_2$ proportionnelles aux amplitudes des composantes cohérentes continues issues de la démodulation synchrone des harmoniques d'ordre 1 et 2 du signal optique.

Ces valeurs de tension se trouvent à la sortie des démodulateurs synchrones propres à chaque harmonique d'ordres 1 et 2.

Le montage représenté sur la figure 3 est analogue à celui de la figure 2. Il comprend les mêmes fonctions générales.

On distingue un oscillateur par exemple programmable pour la génération du signal d'excitation du modulateur 9 à la fréquence $\omega_i$ à travers un bloc CAG de contrôle automatique de gain. L'oscillateur présente deux sorties de signaux aux fréquences $\omega_i$ et $2\omega_i$ vers les deux démodulateurs synchrones calés respectivement sur les fréquences $\omega_i$ et $2\omega_i$ c'est-à-dire sur le fondamental de la modulation et sur son harmonique d'ordre 2. On peut ainsi obtenir en sortie des démodulateurs synchrones les signaux $V_1$ et $V_2$ correspondant aux amplitudes des composantes continues cohérentes du fondamental et de l'harmonique d'ordre 2 du signal optique. Ce montage est complété par un filtre passe-bas dont la fonction est d'isoler $V_{dc}$ qui comme déjà indiqué est la composante incohérente continue du signal optique. Ces valeurs entrent dans une unité de calcul reliée à l'extérieur par une interface de communication. Cette interface est reliée également à l'unité de calcul et reçoit sur l'une de ses entrées une tension de référence Réf $V_{dc}$ pour la valeur $V_{dc}$.

Ce montage comprend également un circuit d'asservissement pour la stabilisation du modulateur 9 ou un module de compensation analogue à celui du montage représenté sur la figure 2.

Selon l'invention l'unité de calcul établit la relation mathématique suivante entre les valeurs $V_1$, $V_2$ et $V_{dc}$ :

$$R = \frac{V_1}{\sqrt{|V_{dc} \times V_2|}}$$

où

$V_1$ = composante continue du fondamental du signal optique,

$V_2$ = composante continue de l'harmonique d'ordre 2 du signal optique,

$V_{dc}$ = composante incohérente continue du signal optique,

Comme précédemment le résultat de cette opération référencé R est une valeur représentative de la vitesse de déplacement angulaire autour de l'axe de pivotement du support sur lequel est monté le gyromètre.

On réalise cette opération de façon analogique ou numérique en vue d'utiliser son résultat dans l'indication de la position du support par rapport à son axe de pivotement et dans l'espace par rapport à un référentiel dans le cas de l'exploitation de trois gyromètres.

On a décrit jusqu'à présent la structure du gyromètre selon l'invention en référence à un seul axe de rotation, c'est-à-dire à une seule bobine.

Selon une variante représentée de façon schématique sur la figure 6, le gyromètre selon l'invention peut comporter n axes, par exemple trois axes, un pour chacune des directions de l'espace.

Dans ce cas, le gyromètre comporte autant de bobines référencées $B_1$ à $B_n$ que l'on considère d'axes 1 à n correspondants, les bobines $B_1$ à $B_n$ étant reliées à l'ensemble constitué par la source lumineuse 2 et le détecteur d'interférence 6 par l'intermédiaire d'un coupleur en étoile 18 à 2 x 2n points d'accès.

Le coupleur en étoile 18 à 2 x 2n points d'accès entre la source 2, les bobines $B_1$ à $B_n$, et le détecteur 6 s'est révélé non indispensable car la surface d'émission de la source est suffisamment importante par rapport au diamètre du coeur de la fibre pour que soit injectée dans plusieurs fibres la même quantité d'énergie que si elle était seule. On peut ainsi traiter un nombre important de circuits contenant une bobine comme autant de circuits individuels ne nécessitant qu'un seul coupleur en X par circuit comme représenté sur la figure 7. On gagne donc toutes les structures du coupleur complexe multiple en étoile.

Comme dans le cas où le gyromètre ne comporte qu'un seul axe, des moyens modulateurs de phase respectivement $M_1$ à $M_n$ modulés chacun par un signal d'attaque respectivement $f_1$ à $f_n$ sont montés de façon asymétrique sur l'une des entrées de chacune des bobines $B_1$ à $B_n$ (figure 8).

On examinera plus en détail le cas où le gyroscope comporte trois axes, soit un axe pour chacune des directions de l'espace.

Deux formes d'exécution différentes peuvent être envisagées.

Selon la première de ces formes représentée sur la figure 8, les entrées de trois bobines sont alimentées par la source lumineuse 2 par l'intermédiaire d'un coupleur en étoile 19 à 2 x 6 points d'accès. Trois oscillateurs sinusoïdaux notés $OSC_1$, $OSC_2$ et $OSC_3$ fournissent les références respectivement $f_1$, $f_2$ et $f_3$ qui servent à moduler les signaux d'attaque de trois modulateurs de phase respectivement $M_1$, $M_2$ et $M_3$ montés de façon asymétrique sur l'une des entrées de chacune des trois bobines du gyromètre. Les signaux $f_1$, $f_2$ et $f_3$ délivrés par les oscillateurs $OSC_1$, $OSC_2$ et $OSC_3$ servent également de référence à trois démodulateurs synchrones 20, 21 et 22 placés en dérivation à la sortie du détecteur d'interférence 6. Comme dans le cas du gyromètre à un axe, le circuit de détection est complété par un filtre passe-bas 23 qui sert à la sélection de la composante incohérente continue $V_{dc}$ du signal optique. Enfin, chaque démodulateur synchrone 20, 21 et 22 ou double démodulateur synchrone délivre une ou deux tensions de sortie représentant $V_1$ ou $V_1$ et $V_2$ dans le cas des deux variantes correspondant aux deux quotients ci-dessus, tensions qui renferment l'information sur la phase Sagnac relative à chacun des trois axes, c'est-à-dire chacune des trois bobines du gyromètre.

Selon la deuxième forme d'exécution possible représentée sur la figure 9, un oscillateur sinusoïdal OSC unique fournissant une référence f est relié par l'intermédiaire d'un commutateur 24 à chacun des trois modulateurs de phase $M_1$, $M_2$ et $M_3$. La modulation est ainsi effectuée en temps partagé et l'on obtient séquentiellement l'information Sagnac pour chaque bobine avec un seul démodulateur synchrone 25.

Bien entendu dans le cas d'un gyromètre à trois axes toutes les variantes et options indiquées pour le montage à un seul axe restent valables et applicables. Il en va notamment ainsi de l'asservissement ou du module de compensation.

## Revendications

**1.** Gyromètre à fibre optique multimode comprenant un interféromètre en anneau de Sagnac à bobine (1) à deux entrées (3) et (4) monté en configuration non réciproque avec une source lumineuse (2) qui alimente les deux extrémités d'un guide en anneau à travers un coupleur (5) et un détecteur optique (6) qui reçoit les deux distributions modales ayant parcouru le guide en sens inverse l'une de l'autre à travers le même coupleur (5), **caractérisé en ce que**

- . le coupleur (5) est unique, multimode et à symétrie modale dans les deux sens ;
- . la fibre optique multimode est une fibre à dispersion intermodale telle que la différence de chemin optique entre deux modes copropagatifs voisins d'ordres quelconques est très supérieure à la longueur de cohérence de la source lumineuse (2), et une fibre à nombre limité de modes possibles de propagation ;
- . un démodulateur fournit une tension $V_1$ de valeur proportionnelle à l'amplitude du fondamental à laquelle vient s'ajouter une valeur $V_2$ proportionnelle à l'amplitude de l'harmonique d'ordre 2 du signal de sortie du détecteur optique (6) dit signal optique et on utilise aussi une valeur proportionnelle à la composante continue incohérente $V_{dc}$ du signal optique obtenue après amplification du signal optique ;
- . une unité de calcul établit une relation mathématique entre l'une ou l'autre, l'une et l'autre ou l'une et toutes les autres des valeurs $V_1$, $V_2$, $V_{dc}$ respectivement des harmoniques d'ordre 0 et 1 et 2 pour s'affranchir des fluctuations des composants du gyromètre par un moyennage sur l'ensemble des modes et leurs combinaisons.

**2.** Gyromètre selon la revendication 1, **caractérisé en ce que** la fibre optique multimode est une fibre à saut d'indice.

**3.** Gyromètre selon la revendication 1 ou 2, **caractérisé en ce que** la source lumineuse (2) est une diode électroluminescente.

**4.** Gyromètre selon l'une quelconque des revendications 1, 2 ou 3, **caractérisé en ce que** l'on détecte les tensions $V_1$ et $V_2$ proportionnelles aux amplitudes des harmoniques 1 et 2 du signal optique par démodulation synchrone.

**5.** Gyromètre selon l'une quelconque des revendications 1, 2 ou 3, **caractérisé en ce que** l'on isole la tension $V_{dc}$ proportionnelle à la composante continue incohérente du signal optique par un filtre passe bas placé après un amplificateur qui est disposé à la sortie du détecteur (6).

**6.** Gyromètre selon l'une des revendications précédentes, **caractérisé en ce que** l'on établit par calcul à partir des harmoniques d'ordre 1 et 2 après démodulation synchrone le rapport algébrique suivant :

$$S = V_1/V_{dc}.$$

**7.** Gyromètre selon l'une des revendications précédentes de 1 à 4, **caractérisé en ce que** l'on établit par calcul le rapport algébrique suivant :

$$R = \frac{V_1}{\sqrt{|V_{dc} \times V_2|}}$$

**8.** Gyromètre selon l'une quelconque des revendications 1 à 3, **caractérisé en ce qu'**il comporte un unique coupleur en X (5) qui sépare l'onde émise par la source lumineuse (2) en deux distributions modales symétriques contrarotatives.

**9.** Gyromètre selon l'une quelconque des revendications 1 à 3, **caractérisé en ce qu'**il comporte un unique coupleur en Y (7).

**10.** Gyromètre selon la revendication 8 ou 9 **caractérisé en ce que** le coupleur X ou Y comporte un filtre interférentiel.

**11.** Gyromètre selon la revendication 8 ou 9 **caractérisé en ce que** les coupleurs X ou Y sont fabriqués à base de composants d'optique diffractive plane.

**12.** Gyromètre selon l'une quelconque des revendications précédentes, **caractérisé en ce qu'**il comprend un modulateur de phase (9) disposé de façon asymétrique sur l'une des entrées (3,4) de la bobine (1) et un oscillateur sinusoïdal (10) qui fournit la référence ($x_i$) qui sert à moduler le signal d'attaque du modulateur de phase (9).

**13.** Gyromètre selon la revendication 12 **caractérisé en ce que** le modulateur (9) est un tube en matériau piézoélectrique sur lequel est enroulé une longueur de fibre multimode.

**14.** Gyromètre selon la revendication 12 **caractérisé en ce que** le modulateur (9) est un tronçon de fibre multimode dont la gaine est recouverte d'un revêtement piézoélectrique.

**15.** Gyromètre selon la revendication 12 **caractérisé en ce que** le modulateur (9) est une fibre multimode insérée dans un capillaire piézoélectrique flexible.

**16.** Gyromètre selon la revendication 12 **caractérisé en ce que** le modulateur (9) est un marquage périodique sur un tronçon de fibre obtenu par photogravure ou par traitement chimique.

**17.** Gyromètre selon la revendication 1, **caractérisé en ce que** l'on asservit le signal modulé de modulation $x_i$ au signal de référence de la démodulation synchrone.

**18.** Gyromètre selon l'une quelconque des revendications précédentes, **caractérisé en ce que** le circuit de détection comprend un démodulateur synchrone (12) et un filtre passe-bas (15) qui sélectionne la composante incohérente continue $V_{dc}$ du signal optique.

**19.** Gyromètre selon la revendication précédente **caractérisé par** un diviseur (17) recevant $V_{dc}$ du filtre passe-bas (15) et $V_1$ du démodulateur synchrone (12) pour établir le rapport algébrique $S=V_1/V_{dc}$.

**20.** Gyromètre selon l'une quelconque des revendications 1 à 7, **caractérisé en ce que** la source lumineuse (2) est modulée en amplitude à une fréquence de modulation f inférieure à la fréquence de modulation du signal d'attaque des moyens modulateurs de phase (9), et **en ce qu'**un double démodulateur synchrone en quadrature (16) détecte la composante incohérente continue $V_{dc}$ du signal optique.

**21.** Gyromètre selon l'une quelconque des revendications 1 à 3, **caractérisé en ce qu'**il comporte n bobines ($B_1$,..., $B_n$) et un coupleur en étoile (18) à 2 x 2n points d'accès.

**22.** Gyromètre selon la revendication précédente **caractérisé en ce que** la source (2) et le détecteur (6) sont reliés individuellement à travers un seul coupleur individuel en X à chacune des bobines ($B_1$,...,$B_n$).

**23.** Gyromètre selon l'une quelconque des revendications précédentes, **caractérisé en ce qu'**il comprend un unique démodulateur synchrone (25) et un unique oscillateur sinusoïdal (OSC) relié aux bobines ($B_1$,$B_2$,$B_3$) par l'intermédiaire d'un commutateur (24).

**24.** Gyromètre selon la revendication 1 **caractérisé en ce qu'**il fonctionne avec deux longueurs d'onde centrales différentes.

**25.** Gyromètre selon la revendication 1 **caractérisé en ce que** l'on limite la contribution des termes d'instabilité au signal global du gyromètre en minorant le rapport $L_{cf}/L$ où $L_{cf}$ est la longueur de cohérence dans la fibre et L sa longueur totale.

**Patentansprüche**

**1.** Gyrometer mit multimodaler optischer Faser mit einem Sagnac-Ringinterferometer mit einer zwei Eingänge (3, 4) aufweisenden Spule (1) die bezüglich einer Lichtquelle (2) in einer nicht-reziproken Konfiguration angeordnet ist, welche die beiden Enden eines ringförmigen Leiters über einen Koppler (5) versorgt, und mit einem optischen Detektor (6), der die beiden Modenverteilungen, welche den Leiter in zueinander entgegengesetzter Richtung durchlaufen haben, über denselben Koppler (5) empfängt, **dadurch gekennzeichnet, dass**

- der Koppler (5) ein einzelner multimodaler ist, der in beiden Richtungen eine Modensymmetrie aufweist;

- die multimodale optische Faser eine Faser mit intermodaler Dispersion ist, so dass die Differenz der optischen Weglänge zwischen zwei sich gemeinsam ausbreitenden, benachbarten Moden beliebiger Ordnung um ein Vielfaches größer ist als die Kohärenzlänge der Lichtquelle (2), und dass die Faser eine begrenzte Zahl ausbreitungsfähiger Moden besitzt;

- ein Demodulator eine Spannung $V_1$ liefert, deren Wert proportional zur Amplitude der Grundschwingung ist und zu der ein Wert $V_2$ hinzugefügt wird, der proportional zur Amplitude der zweiten Harmonischen des Ausgangssignals des optischen Detektors (6) ist, das als optisches Signal bezeichnet wird, und dass zusätzlich ein Wert verwendet wird, der proportional zu der inkohärenten Gleichspannungs-Komponente $V_{dc}$ des optischen Signals ist, die sich nach Verstärkung des optischen Signals ergibt;

- eine Recheneinheit eine mathematische Beziehung herstellt zwischen einem oder einem anderen, einem und einem anderen oder einem und allen anderen der Werte $V_1$, $V_2$, $V_{dc}$ bzw. den Harmonischen der Ordnung 0 und 1 und 2, um durch eine Mittelung über die Gesamtheit der Moden und ihrer Kombinationen Schwankungen der Bestandteile des Gyrometers zu eliminieren.

**2.** Gyrometer nach Anspruch 1, **dadurch gekennzeichnet, dass** die multimodale optische Faser eine Faser mit Indexsprung ist.

**3.** Gyrometer nach Anspruch 1 oder 2, **dadurch gekennzeichnet, dass** die Lichtquelle (2) eine Elektrolumineszenzdiode ist.

**4.** Gyrometer nach einem der Ansprüche 1 bis 3, **dadurch gekennzeichnet, dass** die zu den Amplituden der ersten und zweiten Harmonischen des optischen Signals proportionalen Spannungen $V_1$ und $V_2$ durch synchrone Demodulation detektierbar sind.

**5.** Gyrometer nach einem der Ansprüche 1 bis 3, **dadurch gekennzeichnet, dass** die zu der inkohärenten Gleichspannungs-Komponente des optischen Signals proportionale Spannung $V_{dc}$ durch einen Tiefpassfilter isolierbar ist, welcher einem Verstärker nachgeschaltet ist, der am Ausgang des Detektors (6) angeordnet ist.

**6.** Gyrometer nach einem der vorangehenden Ansprüche, **dadurch gekennzeichnet, dass** ausgehend von den ersten und zweiten Harmonischen nach synchroner Demodulation das algebraische Verhältnis

$$S = V_1/V_{dc}$$

durch Berechnung bestimmbar ist.

**7.** Gyrometer nach einem der Ansprüche 1 bis 4, **dadurch gekennzeichnet, dass** durch Berechnung das algebraische Verhältnis

$$R = \frac{V_1}{\sqrt{\left|V_{dc}\cdot V_2\right|}}$$

bestimmbar ist.

**8.** Gyrometer nach einem der Ansprüche 1 bis 3, **gekennzeichnet durch** einen einzelnen X-Koppler (5), **durch** den die von der Lichtquelle (2) ausgesandte Welle in zwei symmetrische Modenverteilungen mit gegenläufiger Rotation aufteilbar ist.

**9.** Gyrometer nach einem der Ansprüche 1 bis 3, **gekennzeichnet durch** einen einzelnen Y-Koppler (7).

**10.** Gyrometer nach Anspruch 8 oder 9, **dadurch gekennzeichnet, dass** der X- oder Y-Koppler einen Interferenzfilter aufweist.

**11.** Gyrometer nach Anspruch 8 oder 9, **dadurch gekennzeichnet, dass** die X- oder Y-Koppler aus planarendiffraktiven optischen Komponenten gebildet sind.

**12.** Gyrometer nach einem der vorangehenden Ansprüche, **gekennzeichnet durch** einen Phasenmodulator (9), der asymmetrisch an einem der Eingänge (3, 4) der Spule (1) angeordnet ist, und einen Sinusschwinger (10), der das Referenzsignal ($x_i$) liefert, das zum Modulieren des Eingangssignals des Phasenmodulators (9) dient.

**13.** Gyrometer nach Anspruch 12, **dadurch gekennzeichnet, dass** der Modulator (9) als Röhre aus einem piezoelektrischen Material ausgebildet ist, die mit einem Abschnitt der multimodalen Faser umwickelt ist.

**14.** Gyrometer nach Anspruch 12, **dadurch gekennzeichnet, dass** der Modulator (9) ein Abschnitt einer multimodalen Faser ist, deren Außenfläche eine piezoelektrische Beschichtung aufweist.

**15.** Gyrometer nach Anspruch 12, **dadurch gekennzeichnet, dass** der Modulator (9) eine multimodale Faser ist, die in eine flexible piezoelektrische Kapillare eingeführt ist.

**16.** Gyrometer nach Anspruch 12, **dadurch gekennzeichnet, dass** der Modulator (9) als eine durch Fotogravur oder chemische Behandlung erzeugte periodische Markierung auf einem Faserabschnitt ausgebildet ist.

**17.** Gyrometer nach Anspruch 1, **dadurch gekennzeichnet, dass** das modulierte Signal der Modulation $x_i$ gegenüber dem Referenzsignal der synchronen Demodulation unterdrückt ist.

**18.** Gyrometer nach einem der vorhergehenden Ansprüche, **dadurch gekennzeichnet, dass** der Detektorschaltkreis einen Synchron-Demodulator (12) und einen Tiefpassfilter (15) zur Auswahl der inkohärenten Gleichspannungs-Komponente $V_{dc}$ des optischen Signals aufweist.

**19.** Gyrometer nach dem vorangehenden Anspruch, **gekennzeichnet durch** einen Dividierer (17), der $V_{dc}$ vom Tiefpassfilter (15) und $V_1$ vom Synchron-Demodulator (12) zum Bestimmen des algebraischen Verhältnisses $S=V_1/V_{dc}$ empfängt.

**20.** Gyrometer nach einem der Ansprüche 1 bis 7, **dadurch gekennzeichnet, dass** die Lichtquelle (2) mit einer Modulationsfrequenz f amplitudenmoduliert ist, die kleiner als die Modulationsfrequenz des Eingangssignals der Phasenmodulatormittel (9) ist, und dass die inkohärente Gleichspannungs-Komponente $V_{dc}$ des optischen Signals durch einen Quadratur-Synchrondemodulator (16) detektierbar ist.

**21.** Gyrometer nach einem der Ansprüche 1 bis 3, **gekennzeichnet durch** n Spulen ($B_1,...,B_n$) und einen Stern-Koppler (18) mit 2 x 2n Eingangspunkten.

**22.** Gyrometer nach dem vorangehenden Anspruch, **dadurch gekennzeichnet, dass** die Lichtquelle (2) und der Detektor (6) einzeln über einen einzigen individuellen X-Koppler mit jeder der Spulen ($B_1,...,B_n$) verbunden sind.

**23.** Gyrometer nach einem der vorangehenden Ansprüche, **gekennzeichnet durch** einen einzelnen Synchron-Demodulator (25) und einen einzelnen Sinusschwinger (OSC), der über einen Kommutator (24) mit den Spulen ($B_1$,

B$_2$,B$_3$) verbunden ist.

24. Gyrometer nach Anspruch 1, **dadurch gekennzeichnet, dass** es mit zwei verschiedenen zentralen Wellenlängen arbeitet.

25. Gyrometer nach Anspruch 1, **dadurch gekennzeichnet, dass** der Beitrag der Instabilitätsterme zum Gesamtsignal des Gyrometers durch Verkleinern des Verhältnisses L$_{cf}$/L begrenzt ist, wobei L$_{cf}$ die Kohärenzlänge in der Faser und L deren gesamte Länge bezeichnet.

**Claims**

1. Multimode fiber optic gyroscope comprising a ring-shaped Sagnac interferometer with a two input (3) and (4) coil (1) attached in a non-reciprocal configuration with a light source (2) which supplies the two extremities of a ring-shaped guide through a coupler and an optical detector (6) which receives the two .modal distributions that have traversed the guide in mutually inverse directions through the same coupler, **characterized in that**:

   . the coupler (5) is single, multimodal and modally symmetrical in both directions;
   . the multimode optical fiber is an intermodal dispersion fiber such that the difference in optical paths between two nearby co-propagating modes of any order is much greater than the length of coherence of the light source (2) and the limited number of possible propagation modes;
   . a detector furnishes a voltage V$_1$ with a value proportionate to the amplitude of the fundamental, to which is added a value V$_2$ proportionate to the amplitude of the 2nd order harmonic of the output signal of the optical detector (6) called the optical signal, and a value proportionate to the continuous incoherent component V$_{dc}$ of the optical signal obtained after amplification of the optical signal is also used;
   . a processor establishes a mathematical relationship between one or the other, one and the other, or one and ah of the other values V$_1$, V$_2$, V$_{dc}$, respectively, of the 0$^{th}$, 1$^{st}$ and 2$^{nd}$ order harmonics to eliminate fluctuations in the gyroscope components by means of an averaging operation performed on all the modes and their combinations.

2. A gyroscope according to claim 1, **characterized in that** the multimode optic fiber is a high index fiber.

3. A gyroscope according to claim 1 or 2, **characterized in that** the light source (2) is a light-emitting diode.

4. A gyroscope according to any of preceding claims 1, 2 or 3, **characterized in that** the voltages V$_1$ and V$_2$ proportionate to the amplitudes of harmonics 1 and 2 of the optical signal are detected by synchronous demodulation.

5. A gyroscope according to any of preceding claims 1, 2 or 3, **characterized in that** the voltage V$_{dc}$ proportionate to the continuous incoherent component of the fiber optic signal is isolated using a low pass filter placed after an amplifier located at the output of the detector (6).

6. A gyroscope according to any one of the preceding claims, **characterized in that** using calculations based on the harmonics of the order 1 and 2 after synchronous demodulation, the following algebraic relationship is established:

$$S = V_1 / V_{dc}.$$

7. A gyroscope according to any one of the preceding claims 1 through 4, **characterized in that** calculations are used to establish the following algebraic relationship:

$$R = \frac{V_1}{\sqrt{|V_2 \times V_{dc}|}}$$

8. A gyroscope according to any one of claims 1 through 3, **characterized in that** it comprises a single X coupler (5) which separates the wave emitted by the light source (2) into two symmetrical, counterrotating modal distributions.

**9.** A gyroscope according to any one of claims 1 through 3, **characterized in that** it comprises a single Y coupler (7).

**10.** A gyroscope according to claim 8 or 9 **characterized in that** the X or Y coupler comprises an interference filter.

**11.** A gyroscope according to claim 8 or 9 **characterized in that** the X or Y couplers are made from diffractive, plane, optical components.

**12.** A gyroscope according to any one of the preceding claims, **characterized in that** it comprises a phase modulator (9) asymmetrically disposed on one of the inputs (3, 4) of the coil (1) and a sinusoidal oscillator (10) which furnishes the reference ($\omega_i$) used to modulate the attack signal of the phase modulator (9).

**13.** A gyroscope according to claim 12 **characterized in that** the modulator (9) is a tube of piezoelectric material surrounded with a length of multimode optical fiber.

**14.** A gyroscope according to claim 12 **characterized in that** the modulator (9) is a portion of multimode optical fiber with an exterior coating of piezoelectric material.

**15.** A gyroscope according to claim 12 **characterized in that** the modulator (9) is a multimode fiber inserted in a flexible piezoelectric capillary.

**16.** A gyroscope according to claim 12 **characterized in that** the modulator (9) is a periodic marking on a portion of fiber obtained by photogravure or chemical treatment.

**17.** A gyroscope according to claim 1 **characterized in that** the modulated modulation signal ($\omega_i$) is subjugated to the reference signal of the synchronous demodulation.

**18.** A gyroscope according to any one of the preceding claims **characterized in that** the detection circuit consists of a synchronous demodulator (12) and a band pass filter (15) which selects the continuous incoherent component $V_{dc}$ of the optical signal.

**19.** A gyroscope according to the preceding claim **characterized by** a divider 15 (17) which receives $V_{dc}$ from the band pass filter (15) and $V_1$ from the synchronous demodulator (12) to establish the algebraic relationship $S = V_1 / V_{dc}$.

**20.** A gyroscope according to any one of claims 1 through 7 **characterized in that** the light source (2) is modulated in amplitude at a modulation frequency f lower than the modulation frequency of the signal attacking the phase modulation means (9), and **in that** a rectangular double synchronous demodulator detects the continuous incoherent component $V_{dc}$ of the optical signal.

**21.** A gyroscope according to any one of claims 1 through 3 **characterized in that** it comprises n coils ($B_1,...,B_n$) and a star coupler (18) with 2 x 2n access points.

**22.** A gyroscope according to the preceding claim **characterized in that** the source (2) and the detector (6) are individually connected through a single individual X coupler to each of the coils ($B_1,...,B_n$).

**23.** A gyroscope according to any one of the preceding claims **characterized in that** it comprises a single synchronous demodulator (25) and a single sinusoidal oscillator (OSC) connected to the coils ($B_1, B_2, B_3$) by a switch (24).

**24.** A gyroscope according to claim 1 **characterized in that** it functions with two different central wave lengths.

**25.** A gyroscope according to claim 1 **characterized in that** in order to limit the contribution of the unstable periods to the global signal of the gyroscope, the ratio $L_{cf}/L$ is decreased, where $L_{cf}$ is the length of coherence in the fiber and L is its total length.

## FIG.1

## FIG.2

*FIG.3*

$$R = \frac{V_1}{\sqrt{|V_{dc} \times V_2|}}$$

**FIG.4**

Coupleur Y 7
Source 2
8
Détecteur 6
3
4
9
Bobine 1
Modulateur de phase

**FIG.5**

2
Source
Coupleur X ou Y
3
4
Détecteur 6
Filtre passe-bas 15
V (f,t)
Détection $V_{dc}$ 16
$V_{dc}$

## FIG.6

## FIG.7

## FIG.8

EP 0 938 644 B1

Source 2

Coupleur 2 x 6 — 19

Détecteur 6

Démodulateur Synchrone $f_1$ — 20

OSC$_1$, $f_1$

$V$ $\Omega_1$

Démodulateur Synchrone $f_2$ — 21

OSC$_2$, $f_2$

$V_2$ $\Omega_2$

Démodulateur Synchrone $f_3$ — 22

OSC$_3$, $f_3$

$V_2$ $\Omega_3$

$V_{dc}$

Filtre passe-bas 23

$M_1$ $B_1$

$M_2$ $B_2$

$M_3$ $B_3$

## FIG.9

Sortie détecteur

25

Démodulateur Synchrone

$V_1$

$V_2$

OSC, f

24

$M_1$  $M_2$  $M_3$  $M_n$

EP 0 938 644 B1